# EUROPEAN PATENT APPLICATION

(11) **EP 4 786 561 A1**
(43) Date of publication of application: **05.08.2026**
(21) Application number: 26154727.7
(22) Date of filing: 28.01.2026
(51) Int. Cl.: C09K 5/10

(54) **COOLANTS WITH LOW ELECTRICAL CONDUCTIVITY AND IMPROVED CORROSION PROTECTION**

(30) Priority: 30.01.2025 EP 25155126
(71) Applicant: Clariant International Ltd, 4132 Muttenz (CH)
(72) Inventor: HOEVELMANN, Felix, 84508 Burgkirchen (DE); ROHRER, Julia, 84387 Julbach (DE)
(74) Representative: Zusammenschluss Clariant

(57) **Abstract**

The present application describes coolants with low electrical conductivity, the corresponding coolant concentrates, and the use of such coolants in cooling systems of vehicles with electric engines, fuel cells or hybrid engines with a combination of combustion engines with electric engines or a combination of combustion engines with fuel cells, comprising
(A) at least one alkylene glycol
(B) water
(C) at least one azole derivative
(D) at least one tertiary amine
(E) at least one mono- or di-carboxylic acid
(F) a phosphonic acid derivative
(G) optionally at least one further coolant additive.

## Description

The present invention describes coolants with low electrical conductivity and improved corrosion protection, the corresponding coolant concentrates, and the use of such coolants in cooling systems of vehicles with electric engines, fuel cells or hybrid engines with a combination of combustion engines with electric engines or a combination of combustion engines with fuel cells.

Heat-transfer fluids, or coolants, are widely employed in heat exchange systems associated with internal combustion engines, solar systems, fuel cells, electrical motors, generators, electronic equipment, battery equipment, and the like. Heat-transfer fluids are generally composed of a base fluid and one or more additives.

Historically, water has been the preferred base fluid with a view to heat-transfer properties. In many applications, antifreeze properties are needed and in such cases a base fluid consisting of water mixed with freezing point depressants like alcohols, glycols or salts is employed. The additives present in heat-transfer fluids may be employed to obtain a variety of functionalities, such as (further) lowering of the freezing point, improving the heat-exchange properties, inhibiting corrosion, et cetera. Since heat-transfer fluids are in continuous contact with metal parts (aluminium alloys, cast iron, steel, copper, brass, solder, et cetera) they nearly always contain one or more corrosion inhibitors.

The development and increased use of alternative energy technologies, such as battery electric or fuel cell electric vehicles and power plants, which are an attractive alternative to combustion engines due to their relatively low output of pollutants, brings with it the need for a new type of heat-transfer fluids.

Fuel cells are electrochemical cells in which the chemical energy stored is converted to electrical energy by controlled oxidation of the fuel. In most applications, several electrochemical cells are stacked together in series into a so-called fuel cell stack, allowing higher voltages to be generated. Heat generated by the fuel cell stack can be removed by flowing heat-transfer fluid through channels formed by the bipolar plates.

The potential difference between the positive and negative ends of the fuel cell stack may cause a shunt current to flow through the heat-transfer fluid, thus reducing the voltage of the fuel cell. In addition to the deleterious loss of voltage, shunt currents cause additional problems, such as corrosion of the separator plate near the positive end of a fuel cell stack.

Batteries are electrochemical cells in which the chemical energy stored is converted to electrical energy by redox reactions. In most applications, several electrochemical cells are placed together in series into a so-called battery pack, allowing higher voltages to be generated. Heat generated by the battery pack can be removed by flowing heat-transfer fluid through channels within, or outside the battery pack.

In case of contact between the heat transfer fluid and the current collectors (tabs) of the battery pack, safety critical events like short-circuits or electrolysis (leading to formation of flammable hydrogen gas) may occur.

In electrical machines such as electromotors, the heat transfer fluid may come in contact with current carrying parts, like copper windings. In such cases, power loss or short-circuit could lead to failure of the device.

Hence, heat-transfer fluids for use in electrical applications, such as battery and fuel cells, need to have low electrical conductivity (i.e. high electrical resistance) and should be capable of maintaining this throughout the lifetime of the heat-transfer fluid.

Most known heat-transfer fluids (e.g. coolants) have been specifically designed for internal combustion engines and are not suitable for use in electrical applications, such as fuel cells, batteries, electrical machines or power electronics, because they (i) possess high electrical conductivity, or (ii) become significantly more electrically conductive upon aging, especially at increased temperatures. The increase in electrical conductivity upon aging is generally attributed to the formation of ionic compounds due to degradation of alcohols, particularly glycols, which are often used as a base fluid, due to degradation of additives, due to metal corrosion and/or due to impurities in the cooling circuit.

Hence, in recent years there has been an increased interest in developing heat-transfer fluids which are suitable for use in electrical applications, such as fuel cells, batteries, electrical machines or power electronics.

WO 02/101848 discloses coolants comprising azole derivatives and orthosilicates for cooling of fuel-cell drives. The thus disclosed coolants do not contain any acids or amines since this would raise their electrical conductivity. A low conductivity, however, is crucial for such coolants in order to prevent a short circuit of the electrodes and to improve the safety features of the cooling system.

The disadvantage is that such coolants in order to keep the electrical conductivity low do not contain any alkaline constituents which are necessary to neutralize acidic degradation products which otherwise may lead to corrosion.

WO 2018/095759 discloses coolants comprising azole derivatives, orthosilicates, and, optionally, alkoxylated amines for cooling of fuel-cell drives. The alkoxylated amines are used as anti-corrosion inhibitors against corrosion of iron- or copper-containing alloys. The thus disclosed coolants do not contain any carboxylic acids since this would raise their electrical conductivity.

Such coolants were employed at higher concentration, i.e. reduced water content was required to meet the ASTM D 1384 corrosion test limits.

US2023357621 describes coolant compositions for electric vehicles containing siloxane compounds, which exhibit acceptable aluminum corrosion protection, without significant ferrous metal corrosion protection.

EP3960834 describes coolants with low electrical conductivity, the corresponding coolant concentrates, and the use of such coolants in cooling systems of vehicles with electric engines, fuel cells or hybrid engines with a combination of combustion engines with electric engines or a combination of combustion engines with fuel cells.

The coolants contain glycol, water, azole derivatives, ester of orthosilicic acid or alkoxy alkylsilane, tertiary, 2-hydroxyalkyl-modified, monocarboxylic acids and optional silicophosphonates and further coolant additives.

Various other coolant compositions with low electrical conductivity are described in literature, using polyvinyl pyrrolidone (Arteco WO2023275016A1), alkoxylated amines (EP4354558A1), propargyl alcohol (WO2023111687A1) or oxime derivatives (WO2024115457A1), divalent metal cations and organophosphorous acid (WO2023180531A1).

WO2023180531A1 described heat-transfer fluid compositions, such as concentrated and ready-to-use heat-transfer fluid compositions, comprising a base fluid, a divalent metal cation and an organophosphorus acid or a salt thereof, wherein the compositions have an electrical conductivity at 25 °C of less than 500 µS/cm, wherein the base fluid consists of water and alcohol, wherein the alcohol is present in an amount in the range of 10-99.5 wt.% by weight of the base fluid, and wherein the composition comprises more than 75 wt.% of the base fluid by total weight of the composition. Such compositions show comparably high electrical conductivity (above 100 µS/cm) due to the use of divalent metal salts, which increase electrical conductivity and raise concerns with regards to corrosion protection.

Literature known, low conductive coolants were tested against either selected metals only, usually avoiding cast iron and solder, at milder temperature or over reduced time periods, allowing for suitable corrosion protection in specific cases or reduced water content. Yet, a coolant composition, with low electrical conductivity but broad metal corrosion protection is not described.

The present invention describes coolant formulations, which combine a low electrical conductivity (below 100 µS/cm at 25 °C) and simultaneously offer a corrosion protection towards the metal species described in the ASTM D 1384 standard, covering brass, soft solder, aluminum, cast iron, steel and copper at the typical concentration of a corrosion inhibitor. Such coolants are equally useful for application as conventional coolants, e.g. for combustion engines, and for electric vehicles.

In particular, the conductivity of the finished coolant formulation preferably shall be lower than 100 µS/cm and remain below 100 µS/cm after corrosion testing, in order to not compromise low conductive requirements for modern electric vehicles.

In a first aspect, this invention relates to a coolant, comprising
(A) at least one alkylene glycol
(B) water
(C) at least one azole derivative
(D) at least one tertiary amine
(E) at least one mono- or di-carboxylic acid
(F) a phosphonic acid derivative.

In a preferred embodiment of this invention, the coolant comprises at least one further coolant additive (G).

In a preferred embodiment of this invention, components (C) to (G) are present in amounts so that the coolant exhibits an electrical conductivity of less than 100, preferably less than 80, and more preferably less than 70 µS/cm.

The coolants of the instant invention exhibit a low electrical conductivity which makes them usable as coolants for vehicles with an electrical drive, and good anti-corrosion properties towards brass, soft solder, aluminum, cast iron, steel and copper.

In this application, a reference to weight-% is relative to the total weight of the coolant composition as 100 wt.-%, if not otherwise noted.

Details of the constituents are as follows:

### Alkylene glycols (A)

Alkylene glycols (A) preferably are according to the formula

R^{A}-O-(CH₂-CHR^{C}-O)ₙ-R^{B}

wherein
- R^{A} and R^{B}: are independently H or C₁ to C₄ alkyl,
- R^{C}: is H or methyl, and
- n: is a number from 1 to 5.

Examples of alkylene glycols (A) are monoethylene glycol, diethylene glycol, triethylene glycol, tetraethylene glycol and mixtures thereof, but also monopropylene glycol, dipropylene glycol and mixtures thereof, higher poly alkylene glycols, alkylene glycol ethers, for example monoethylene glycol monomethyl ether, diethylene glycol monomethyl ether, triethylene glycol monomethyl ether, tetraethylene glycol monomethyl ether, monoethylene glycol monoethyl ether, diethylene glycol monoethyl ether, triethylene glycol monoethyl ether, tetraethylene glycol monoethyl ether, monoethylene glycol mono-n-butyl ether, diethylene glycol mono-n-butyl ether, triethylene glycol mono-n-butyl ether and tetraethylene glycol mono-n-butyl ether, or glycerol, in each case either alone or as mixtures thereof. 1,3-Propanediol is also a suitable alkylene glycol.

### Water (B)

Water used as component for the coolants according to the present invention should be ion-free, designating water with a neutral pH-value and comprising essentially no further ions than those hydroxide ions and hydronium ions out of the autoprotolysis of water at the respective temperature.

The electrical conductivity (throughout this text determined according to ASTM D 1125) at 25 °C of the ion-free water used should preferably not exceed 10 µS/cm), more preferably not more than 5, even more preferably not more than 2, and especially not more than 1 µS/cm).

The ion-free water used can be pure distilled or twice-distilled water or water which has been deionized, for example by ion exchange.

### Azole derivatives (C)

Azole derivatives in the context of the present invention mean five-membered heterocyclic compounds having 2 or 3 heteroatoms from the group consisting of nitrogen and sulfur, which comprise no or at most one sulfur atom, and which may be fused to an aromatic or saturated six-membered carbocyclic ring, said ring may be substituted with an C₁-C₁₀-alkyl group.

These five-membered heterocyclic compounds (i.e. azole derivatives) preferably contain either two N atoms and no S atom, or 3 N atoms and no S atom, or one N atom and one S atom as heteroatoms.

Preferred embodiments of azole derivatives are annellated imidazoles and annellated 1,2,3-triazoles of the general formulae (I) and (II) 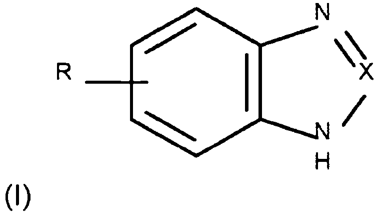 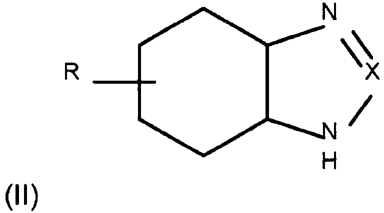 wherein
R is hydrogen or a C₁-C₁₀-alkyl group, in particular methyl or ethyl, and
X is a nitrogen atom or the C-H group.

Typical and preferred examples of azole derivatives of the general formula (I) are benzimidazole (X=C-H, R=H), benzotriazoles (X=N, R=H) and tolyltriazole (tolyltriazole) (X=N, R=CH₃).

A typical example of an azole derivative of the general formula (II) is hydrogenated 1,2,3-tolyltriazole (tolyltriazole) (X=N, R=CH₃).

A further preferred embodiment of the azole derivatives is benzothiazoles of the general formula (III) 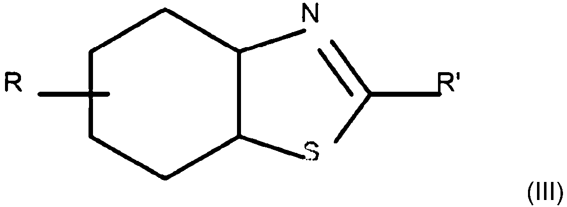 wherein
R is hydrogen or a C₁-C₁₀-alkyl group, in particular methyl or ethyl, and
R' is hydrogen, a C₁-C₁₀-alkyl radical, in particular methyl or ethyl, a mercapto group (-SH) or a group of the formula -S-CH₂-COOH or -S-CH₂-CH₂-COOH.

A typical example of an azole derivative of the general formula (III) is 2-mercaptobenzothiazole.

It is also possible to use (2-benzothiazylthio)acetic acid (R'=-S-CH₂-COOH) or (2-benzothiazylthio) propionic acid (R'=-S-CH₂-CH₂-COOH).

Further suitable azole derivatives are non-annellated azole derivatives of the general formula (IV) 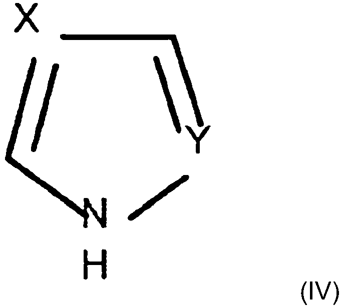 wherein
X and Y are selected from two nitrogen atoms or one nitrogen atom and one C-H group.

Examples for formula (IV) are 1H-1,2,4-triazole (X=Y=N) or, preferably, imidazole (X=N, Y=C-H).

For the purposes of the present invention, benzimidazole, benzotriazole, tolyltriazole, hydrogenated tolyltriazole or mixtures thereof, in particular benzotriazole or tolyltriazole, are very particularly preferred as azole derivatives.

The azole derivatives mentioned are commercially available or can be prepared by conventional methods. Hydrogenated benzotriazoles such as hydrogenated tolyltriazole are likewise obtainable as described in DE-A 1 948 794 and are also commercially available.

### Tertiary amines (D)

Tertiary amines correspond preferably to the formula (V)

NR⁶R⁷R⁸ (V)

wherein R⁶, R⁷ and R⁸ are independently selected from the group consisting of 2-hydroxyethyl, 2-hydroxypropyl, or aliphatic, cycloaliphatic or aromatic groups with up to 20 carbon atoms, preferably with up to 18, more preferably with up to 16, even more preferably with up to 14, and especially up to 12 carbon atoms, with the proviso that at least one of R⁶, R⁷ and R⁸ is 2-hydroxyethyl or 2-hydroxypropyl.

Tertiary amines (D) preferably may bear one, two or three 2-hydroxyethyl or 2-hydroxypropyl groups.

The substituents of the tertiary amine (D) according to formula (V) not being a 2-hydroxyethyl- or 2-hydroxypropyl-group may be aliphatic, cycloaliphatic or aromatic groups with up to 20 carbon atoms, preferably with up to 18, more preferably with up to 16, even more preferably with up to 14, and especially up to 12 carbon atoms. These substituents are preferably aliphatic or aromatic and more preferably aliphatic.

Aromatic substituents can be e.g. phenyl, tolyl or naphthyl.

Aliphatic substituents may be linear or branched, preferred are linear, alkyl substituents comprising 1 to 18 carbon atoms, preferably 2 to 16, more preferably 4 to 14, and especially 6 to 12 carbon atoms.

The tertiary amines (D) are preferably derived from fatty amines, which are preferably obtainable by hydrogenation and amination of fatty acids and esters, particularly preferably by hydrogenation and amination of 2-ethylhexanoic acid, octanoic acid (caprylic acid), pelargonic acid (nonanoic acid), 2-propylheptanoic acid, decanoic acid (capric acid), undecanoic acid, dodecanoic acid (lauric acid), tridecanoic acid, tetradecanoic acid (myristic acid), pentadecanoic acid, palmitic acid (hexadecanoic acid), palmitoleic acid [(9Z)-hexadec-9-enoic acid], margaric acid (heptadecanoic acid), stearic acid (octadecanoic acid), oleic acid [(9Z)-octadec-9-enoic acid], elaidic acid [(9E)-octadec-9-enoic acid], linoleic acid [(9Z,12Z)-octadeca-9,12-dienoic acid], linolenic acid [(9Z,12Z,15Z)-octadeca-9,12,15-trienoic acid], eleostearic acid [(9Z,11E,13E)-octadeca-9,11,13-trienoic acid], ricinoleic acid ((R)-12-hydroxy-(Z)-octadec-9-enoic acid), isoricinoleic acid [(S)-9-hydroxy-(Z)-octadec-12-enoic acid], nonadecanoic acid, arachidic acid (eicosanoic acid), behenic acid (docosanoic acid) and erucic acid [(13Z)-docos-13-enoic acid].

Examples for tertiary amines (D) bearing one 2-hydroxyethyl- or 2-hydroxypropyl-group and two other substituents are those of the general formula (VI) 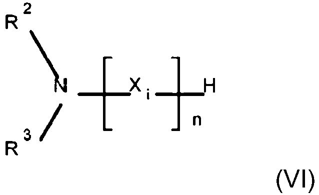 wherein
R² and R³ independently are a linear or branched, preferred a linear, alkyl substituent comprising 1 to 18 carbon atoms, preferably 2 to 16, more preferably 4 to 14, and especially 6 to 12 carbon atoms, or together may form a five- or six-membered ring including the nitrogen atom,
Xᵢ is -CH₂-CH₂-O-, -CH₂-CH(CH₃)-O- or -CH(CH₃)-CH₂-O-, preferably -CH₂-CH₂-O-, and
n is an integer from 1 to 5, preferably from 1 to 4, more preferably from 1 to 3, even more preferably 1 or 2, and especially 1.

Preferred individual tertiary amines according to formula (VI) are dimethyl ethanolamine, dimethyl propanolamine, diethyl ethanolamine, diethyl propanolamine, di-n-butyl ethanolamine, di-n-butyl propanolamine, N-hydroxyethyl pyrrolidine, N-hydroxyethyl piperidine, and N-hydroxyethyl morpholine.

Examples for tertiary amines (D) bearing two 2-hydroxyethyl- or 2-hydroxypropyl-groups and one other substituent are of the general formula (VII) 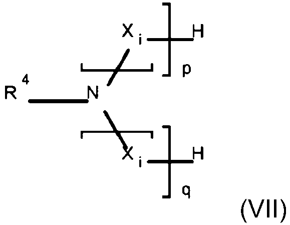 wherein
R⁴ is a linear or branched, preferred a linear, alkyl substituent comprising 1 to 18 carbon atoms, preferably 2 to 16, more preferably 4 to 14, and especially 6 to 12 carbon atoms,
each Xi for i = 1 to p and 1 to q is independently selected from the group consisting of -CH₂-CH₂-O-, -CH₂-CH(CH₃)-O- or -CH(CH₃)-CH2-O-, preferably -CH₂-CH₂-O-, and
p and q independently of another are an integer from 1 to 5, preferably from 1 to 4, more preferably from 1 to 3, even more preferably 1 or 2, and especially 1.

Preferred individual tertiary amines according to formula (VII) are the bis(2-hydroxyethyl) amines or bis(2-hydroxypropyl) amines bearing as substituent R⁴ n-hexylamine, 2-methylpentylamine, n-heptylamine, 2-heptylamine, isoheptylamine, 1-methylhexylamine, n-octylamine, 2-ethylhexylamine, 2-aminooctane, 6-methyl-2-heptylamine, n-nonylamine, isononylamine, n-decylamine and 2-propylheptylamine or mixtures thereof.

Particular preference is given to bis(2-hydroxyethyl)-substituted n-hexylamine, n-octylamine, 2-ethylhexylamine and n-decylamine, with n-octylamine and 2-ethylhexylamine, in particular bis(2-hydroxyethyl) n-octylamine, being particularly preferred.

These compounds are preferably obtainable by reacting the corresponding amines R⁴-NH₂ with alkylene oxides to the desired average statistical degree of alkoxylation, preferably under basic conditions. This is particularly preferred when the structural unit Xi is derived from ethylene oxide or propylene oxide, preferably from ethylene oxide.

Examples for tertiary amines (D) bearing three 2-hydroxyethyl- or 2-hydroxypropyl-groups are triethanolamine and tripropanolamine, preferably triethanolamine.

Preferred amines (D) are dimethyl ethanolamine, dimethyl propanolamine, diethyl ethanolamine, di-n-butyl ethanolamine, N-hydroxyethyl morpholine, bis(2-hydroxyethyl) n-hexylamine, bis(2-hydroxyethyl) n-octylamine, bis(2-hydroxyethyl) 2-ethylhexylamine, bis(2-hydroxyethyl) n-decylamine, bis(2-hydroxyethyl) cyclohexylamine, triethanolamine and sugar based, tert. amines, such as N,N,-Dimethylglucamine and N-2-hydroxyethyl-N-Methyl-glucamine, and N-2-hydroxypropyl-N-Methyl-glucamine.

### Carboxylic Acid (E)

Suitable carboxylic acids (E) may be linear or branched-chain, aliphatic, cycloaliphatic or aromatic monocarboxylic acids with up to 20 carbon atoms, preferably with from 2 to 18, more preferably with from 5 to 16, even more preferably with from 5 to 14, most preferably with from 6 to 12, and especially with from 8 to 10 carbon atoms.

Branched-chain aliphatic monocarboxylic acids are preferred.

Useful linear or branched-chain, aliphatic or cycloaliphatic monocarboxylic acids (E) are, for example, propionic acid, pentanoic acid, 2,2-dimethylpropanoic acid, hexanoic acid, 2,2-dimethylbutaneoic acid, cyclohexyl acetic acid, octanoic acid, 2-ethylhexanoic acid, nonanoic acid, isononanoic acid, decanoic acid, undecanoic acid or dodecanoic acid.

A suitable aromatic monocarboxylic acid (E) is in particular benzoic acid; additionally useful are also, for example, C₁- to C₈-alkylbenzoic acids such as o-, m-, p-methylbenzoic acid or p-tert-butylbenzoic acid, and hydroxyl-containing aromatic monocarboxylic acids such as o-, m- or p-hydroxybenzoic acid, o-, m- or p-(hydroxymethyl)benzoic acid or halobenzoic acids such as o-, m- or p-fluorobenzoic acid.

Especially preferred are 2-ethylhexanoic acid and isononanoic acid.

As used herein, isononanoic acid refers to one or more branched-chain aliphatic carboxylic acids with 9 carbon atoms. Embodiments of isononanoic acid used in the engine coolant composition may include 7-methyloctanoic acid (e.g., CAS Nos. 693-19-6 and 26896-18-4), 6,6-dimethylheptanoic acid (e.g., CAS No. 15898-92-7), 3,5,5-trimethylhexanoic acid (e.g., CAS No. 3302-10-11), 3,4,5-trimethylhexanoic acid, 2,5,5-trimethylhexanoic acid, 2,2,4,4-tetramethylpentanoic acid (e.g., CAS No. 3302-12-3) and combinations thereof. In a preferred embodiment, isononanoic acid has as its main component greater than 90% of one of 7-methyloctanoic acid, 6,6-dimethylheptanoic acid, 3,5,5-trimethylhexanoic acid, 3,4,5-trimethylhexanoic acid, 2,5,5-trimethylhexanoic acid, and 2,2,4,4-tetramethylpentanoic acid. The balance of the isononanoic acid may include other nine carbon carboxylic acid isomers and minor amounts of one or more contaminants. In a preferred embodiment, the isononanoic acid has as its main component greater than 90% of 3,5,5-trimethylhexanoic acid and even more preferably, the main component is greater than 95% 3,5,5-trimethylhexanoic acid.

Dicarboxylic acids can be aliphatic, cycloaliphatic or aromatic, preferably aliphatic or aromatic and more preferably aliphatic with up to 20 carbon atoms, preferably with up to 18, more preferably with up to 16, even more preferably with up to 14, and especially up to 12 carbon atoms.

Examples of dicarboxylic acids are oxalic acid, malonic acid, succinic acid, glutaric acid, adipic acid, pimelic acid, suberic acid, azelaic acid, sebacic acid, undecanedioic acid, dodecanedioic acid, alkyl or alkenyl succinic acids, 2-metylbutane dioic acid, 2-ethylpentanedioic acid, 2-n-dodecylbutanedioic acid, 2-ndodecenylbutanedioic acid, 2-phenylbutanedioic acid, 2-(p-methylphenyl) butanedioic acid, 2,2-dimethylbutanedioic acid, 2,3-dimethylbutanedioic acid; 2,3,4 trimethylpentanedioic acid, 2,2,3-trimethylpentanedioic acid; 2-ethyl-3-methylbutanedioic maleic acid, fumaric acid, pent-2-enedioic acid, hex-2-enedioic acid; hex-3-endioic acid; 5-methylhex-2-enedioic acid; 2,3-dimethylpent-2-enedioic acid; 2-methylbut-2-enedioic acid, 2-dodecylbut-2-enedioic acid, phthalic acid, isophthalic acid, terephthalic acid and substituted phthalic acids such as 3-methylbenzene-1,2-dicarboxylic acid; 4-phenylbenzene-1,3-dicarboxylic acid; 2-(1-propenyl) benzene-1,4-dicarboxylic acid, and 3,4-dimethylbenzene-1,2-dicarboxylic acid.

In a preferred embodiment the coolants according to the invention contains exclusively dicarboxylic acids.

### PHOSPHONIC ACID derivatives (F)

The phosphonic acid derivative is an organophosphorus acid or a salt thereof according to formula (VIII). The compositions can also comprise mixtures of different organophosphorus acids or salts thereof. Wherever the terms 'organophosphorus acid' or organophosphoric acid' are used, the wording 'and salts thereof should be read along, unless explicitly mentioned otherwise.

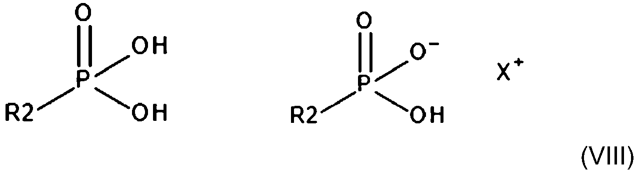

Suitable cations (X⁺) in salts of organophosphorus acid are chosen from the group consisting of alkali metals, ammonium and protonated amines, preferably chosen from the group consisting of protonated amines. The term 'protonated amines' as used herein encompasses primary, secondary and tertiary ammonium cations. Nonlimiting examples of protonated amines are protonated ethoxylated fatty amines and amine ethoxylates, such as
2,2'-(Cyclohexylimino)bisethanol, capryl amine oxethylate, Triethanolamine, and teritiary sugar based amines, such as N,N-Dimethylglucamine. In particular, all tertiary amines described as components (D) are particular suitable in their protonated form as a cations for the organophosphorous acid salt.

R² is an alkyl group comprising between 2 and 20 carbon atoms, preferably 4 to 12 carbon atoms, most preferably 6 to 10 carbon atoms. As used herein, the term 'alkyl group' should be interpreted to comprise both linear and branched carbon atom chains, wherein the chains are preferably substituted with one or more of hydroxyl group, amine group, phosphonic acid group or a salt thereof and carboxylic acid group or a salt thereof, and wherein the chains may comprise one or more of nitrogen, oxygen and sulphur atoms in their backbone, with the exclusion of the position of the backbone that is bonded to the phosphorus atom.

In an embodiment, the organophosphorus acid carries a carboxylic group in the alkyl group moiety according to formula (la-c). The carboxylic-organophosphonic acid can be present as the free acid (la) or as a salt either on the carboxy function (Ib) or the phosphonic acid function (Ic). R¹ is an alkyl group comprising between 2 and 20 carbon atoms, preferably 4 to 12 carbon atoms, most preferably 6 to 10 carbon atoms. As used herein, the term 'alkyl group' should be interpreted to comprise both linear and branched carbon atom chains, wherein the chains are preferably substituted with one or more of hydroxyl group, amine group, phosphonic acid group or a salt thereof and carboxylic acid group or a salt thereof, and wherein the chains may comprise one or more of nitrogen, oxygen and sulphur atoms in their backbone, with the exclusion of the position of the backbone that is bonded to the phosphorus atom.

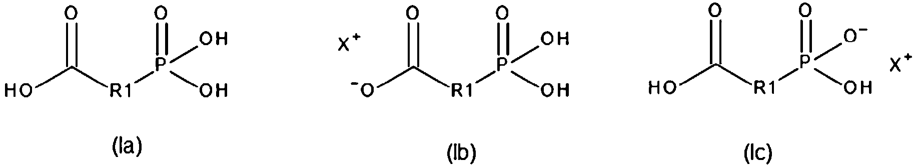

In an embodiment, the organophosphorus acid salt is a carboxy functionalized organophosphorus acid according to formula (II) 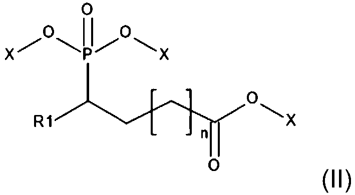 wherein
R1 is selected from hydrogen or a C1-C4 alkyl group,
X is selected from hydrogen, alkali metal, or an ammonium group,
n stands for a number from 5 - 7, and
the sum (N+n+3), wherein N is the total number of all carbon atoms in R, from 8 to 14.

In one preferred embodiment, the organophosphorus acid salt is the triethanolammonium salt of 10-phosphonodecanoic acid.

In an embodiment, the organophosphorus acid or the salt thereof is present in the heat transfer fluid composition in an amount within the range of 0.001-0.25 wt.%, by total weight of the heat-transfer fluid composition, preferably within the range of 0.002-0.15 wt.%.

### FURTHER COOLANT ADDITIVES (G)

It is further possible to add further typical coolant additives to the coolants of the present invention, as long as they do not increase the electrical conductivity above the critical value pointed out above.

As further customary assistants, the inventive coolant may also comprise, in customary small amounts, defoamers (generally in amounts of from 0.003 to 0.008% by weight) and, for reasons of hygiene and safety in the event that it is swallowed, bitter substances (for example of the denatonium benzoate type) and dyes.

While the use of deionized water is highly recommended in order to maintain low electrical conductivity of the final coolant, hard water stabilizer may be used as an additive in order to prevent scale formation and deposition in case of wrong water quality use. Hard water stabilizers are literature known and can employed on need base, depending on the water quality and hardness.

Wherever possible the use of non-ionic additives is preferred over ionic alternatives as long as a similar effect can be achieved using the non-ionic additives.

In one preferred embodiment, the coolant compositions do not contain any divalent metal cation salts. While trace amounts of metal salts cannot be fully excluded in industrial processes, the content of divalent metal salts in preferably less than 0.001 wt.-%, more preferably less than 0.0001 wt.-%.

As used in this application, the term 'essentially free of divalent metal cations' means that the coolant composition contains less than 0.0001 wt.-% of divalent metal cations, based on the total weight of the coolant composition. Divalent metal cations include, but are not limited to, Ca²⁺, Mg²⁺, Zn²⁺, Cu²⁺, Fe²⁺, Mn²⁺, Ni²⁺, Co²⁺, Sr²⁺, Ba²⁺, and Pb²⁺. This extremely low level represents only trace amounts that may be unavoidably present due to raw material impurities or processing conditions, but are not intentionally added as functional components of the coolant composition. At these trace levels, the divalent metal cations do not significantly contribute to the properties or performance of the coolant.

Main requirement of the coolants according to the present invention is that the coolants should exhibit an electrical conductivity at 25 °C of less than 100, preferably less than 80 µS/cm (determined according to ASTM D 1125) to make the suitable for cooling systems of vehicles with electric engines.

In order to achieve that purpose, the amount of ionic species, species which may contain ionic byproducts or combination of species which may form ions, such as acids and bases, should be kept at a minimum in order not to raise the electrical conductivity over the critical value.

Therefore, the amounts of components (C) to (H) in the coolant are chosen in a way that the value of 100 µS/cm for the electrical conductivity is not exceeded.

In order to keep combinations of ion-forming species at a minimum the molar ratio between tertiary amine (E) and monocarboxylic acid (F) is from 1 : 0.1 to 1 : 0.6, preferably from 0.15 to 0.5 and more preferably from 0.2 to 0.4.

Preferably, the coolants according to the invention are composed as follows:
(A) at least one glycol in an amount of 10 to 85 wt%, preferably 20 to 80 wt%, more preferably 30 to 70 wt%
(B) water in an amount of 10 to 85 wt%, preferably 20 to 80 wt%, more preferably 30 to 70 wt%
(C) at least one azole derivative in an amount of 0.01 to 0.5 wt%, preferably 0.02 to 0.4 wt%, more preferably 0.03 to 0.3 wt%, especially 0.04 to 0.2 wt%
(D) at least one tertiary amine bearing at least one 2-hydroxyethyl- or 2-hydroxypropyl-group in an amount of 0.01 to 0.5 wt%, preferably 0.015 to 0.6 wt%, more preferably 0.03 to 0.2 wt%
(E) at least one carboxylic acid in an amount of 0.001 to 0.5 wt%, preferably 0.01 to 0.15 wt%, more preferably 0.015 to 0.1 wt%
(F) at least one phosphonic acid derivative in an amount of 0.005 to 0.5 wt%, preferably 0.012 to 0.25 wt%, more preferably 0.025 to 0.1 wt%
(G) optionally at least on further coolant additive in an amount of 0 to 0.5 wt% for each further coolant additive, preferably 0.01 to 0.4 wt%, more preferably 0.02 to 0.2 wt%.
with the proviso that the sum of all components always add up to 100 wt%.

A further embodiment of the present invention are coolant concentrates. Coolants usually are obtained from coolant concentrates by dilution with water (B). Hence, the coolant concentrates usually contain little or no water (B).

Typically, the coolant concentrates according to the invention are composed as follows:
(A) at least one glycol: 50 to 99,9 wt%, preferably 60 to 99,8 wt%, more preferably 75 to 99,7 wt%
(B) water: 0 to 10 wt%, preferably 0 to 8 wt%, more preferably 0 to 5 wt%
(C) at least one azole derivative: 0.02 to 1 wt%, preferably 0.04 to 0.8 wt%, more preferably 0.06 to 0.6 wt%, even more preferably 0.08 to 0.5, especially 0.1 to 0.3 wt%
(D) at least one tertiary amine bearing at least one 2-hydroxyethyl- or 2-hydroxypropyl-group: 0.02 to 0.8 wt%, preferably 0.03 to 0.6 wt%, more preferably 0.06 to 0.4 wt%
(E) at least one carboxylic acid: 0.001 to 0.5 wt%, preferably 0.01 to 0.3 wt%, more preferably 0.02 to 0.1 wt%
(F) at least one phosphonic acid derivative in an amount of 0.01 to 1 wt%, preferably 0.03 to 0.5 wt%, more preferably 0.05 to 0.2 wt%
(G) optionally at least on further coolant additive: 0 to 0.5 wt% for each further coolant additive, preferably 0.002 to 0.4 wt%, more preferably 0.004 to 0.25 wt%.
with the proviso that the sum of all components always add up to 100 wt%.

Because of their low electrical conductivity, the coolants according to the present invention may be used in cooling systems of vehicles with electric engines, fuel cells or hybrid engines with a combination of combustion engines with electric engines or a combination of combustion engines with fuel cells.

### Examples

The invention is illustrated in the following examples, but without it being restricted thereto.

Coolant compositions were prepared by mixing the constituents as listed in Table 1 and Table 2 (all amounts given in weight%) and the features and physical parameters as pointed out in the tables were determined as follows:

| | |
|---|---|
| Appearance | Visual |
| Water, % | DIN 51777 |
| Density at 20 °C, g/cm³ | DIN 51757 |
| pH as-is | ASTM D 1287 |
| Reserve alkalinity of 10 mL, mL 0.1 mol/L HCl | ASTM D 1121 |
| Refractive index at 20 °C | DIN 51423 |
| Conductivity at 25 °C, µS/cm | ASTM D 1125 |

Inventive examples are designated as Ex1 - Ex 7, while Comp1 - Comp 6 serve for comparative purpose.

The coolants were brought to a slightly alkaline pH-value using different bases in order to ensure a sufficient reserve alkalinity which is necessary to buffer acidic degradation products of the coolant. Furthermore, coolant compositions where tested for corrosion protection towards the metal species described in the ASTM D 1384 standard, covering brass, soft solder, aluminum, cast iron, steel and copper. Coolant compositions Ex1 - Ex6 and Comp1-Comp4 were employed in the composition described in table1.

While all coolant formulations can meet the requirements of low electrical conductivity, specifically below 100 µS/cm at 25 °C, as long as the amount and ratio of corrosion inhibitors is sufficiently low, the corrosion protection performance of inventive examples show superior results.

In the absence of organophosphonic acid derivatives, severe visual corrosion, mainly on cast iron and aluminum is observed. Inventive examples, containing organophosphonic acid derivatives, even at a low level, showed no visual corrosion and minimum mass deviation on the individual metal plates.

**Table 1:**

| Composition | Component | Ex1 | Ex2 | Ex3 | Ex4 | Ex5 | Ex6 | Comp1 | Comp2 | Comp3 |
|---|---|---|---|---|---|---|---|---|---|---|
| Monoethylenglykol | A | 49.98 | 49.95 | 49.96 | 49.89 | 50 | 50 | 49.86 | 49.88 | 49.96 |
| DI-Water | B | 49.79 | 49.79 | 49.79 | 49.74 | 49.63 | 49.73 | 49.81 | 49.81 | 49.81 |
| Tolyltriazole | C | 0.10 | 0.10 | 0.10 | 0.10 | 0.10 | 0.08 | 0.10 | 0.10 | 0.10 |
| Triethanolamine | D | 0.08 | | | | 0.15 | 0.07 | | 0.08 | |
| N,N-Dimethylglucamine | D | | | 0.11 | 0.22 | | | | | |
| Caprylamine + 2 EO | D | | 0.11 | | | | 0.05 | 0.11 | | 0.11 |
| Sebacic acid | E | 0.02 | | | 0.02 | | 0.01 | | 0.03 | |
| Isononanoic acid | E | | 0.02 | 0.01 | | 0.01 | | 0.02 | | 0.02 |
| triethanolammonium salt of 10-phosphonodecanoic acid | F | 0.02 | 0.02 | 0.02 | 0.02 | 0.2 | 0.04 | | | |
| (2-benzothiazylthio)acetic acid | | | | | | | 0.02 | | | |
| Tetraethoxysilane | - | | | | | | | 0.10 | 0.10 | |
| Sum | | 100.00 | 100.00 | 100.00 | 100.00 | 100.00 | 100.00 | 100.00 | 100.00 | 100.00 |
| Characteristics | unit | | | | | | | | | |
| pH (as is) | - | 7.5 | 8.1 | 7.7 | 8.2 | 7.6 | 7.6 | 8.2 | 7.5 | 8.2 |
| reserve alkalinity | mL 0,1M HCl | 0.3 | 0.4 | 0.2 | 0.4 | 0.4 | 0.4 | 0.5 | 0.4 | 0.5 |
| electrical conductivity, 25 °C | µS/cm | 64 | 56 | 38 | 74 | 68 | 72 | 50 | 68 | 46 |

| Characteristics | unit | limit | | Ex1 | Ex2 | Ex3 | Ex4 | Comp1 | Comp2 | Comp3 |
|---|---|---|---|---|---|---|---|---|---|---|
| Appearance of fluids | | | | Yellow, clear | Yellow, clear | Yellow, clear | Yellow, clear | Brown, with particles | Yellow with slight sediment | Turbid brown with particles |
| Appearance of metals | | | | i.O. | i.O. | i.O. | i.O. | visual corrosion on cast iron and Aluminum | visual corrosion on cast iron and Aluminum | visual corrosion |
| pH prior to Test | | >7 | | 7.5 | 8.1 | 7.7 | 8.2 | 8.2 | 7.5 | 8.2 |
| pH after Test | | >7 | | 7.4 | 7.9 | 7.3 | 7.9 | | 7.4 | 6.9 |
| RA prior to Test | mL 0.1M HCl/10mL | | | 0.3 | 0.4 | 0.2 | 0.4 | | 0.4 | 0.2 |
| RA after Test | mL 0.1M HCl/10mL | | | 0.3 | 0.3 | 0.1 | 0.3 | | 0.3 | 0.0 |
| conductivity (25°C) prior to Test | µS/cm | 100 | | 64 | 56 | 38 | 74 | 49 | 68 | 46 |
| conductivity (25°C) after Test | | µS/cm | 100 | 64 | 62 | 41 | 83 | | 66 | 102 |
| Copper | | mg/Plate | max. 10 | -1.2 | -0,8 | 2.0 | -0.1 | -1 | -1 | 0.4 |
| Solder | | mg/Plate | max. 30 | -4.2 | -4,7 | -5.6 | -21.7 | -8 | -17 | -32.1 |
| Brass | | mg/Plate | max. 10 | -1.3 | -1,0 | -0.1 | 0.3 | -1 | -2 | -0.3 |
| Steel | | mg/Plate | max. 10 | -1.4 | - 0,9 | -1.8 | -0.8 | -0.2 | -1 | -46.7 |
| Cast iron | | mg/Plate | max. 10 | -1.5 | 0,2 | -0.9 | -0.5 | -23 | -24 | -216.5 |
| Aluminum | | mg/Plate | max. 30 | 3.1 | 0,4 | 1.4 | -4.8 | 5 | -1 | -51.0 |

To underline the key differences between our invention and prior art compositions, we conducted direct comparison between inventive example Ex7, which is essentially free of divalent metal cations, and prior art compositions (Comp5 and Comp6) which contain divalent metal salts as taught in WO2023180531 A1.

Contrary to the teaching in WO2023180531A1 that the use of divalent metal salts gives surprisingly low electrical conductivity, especially upon contact with aluminum substrates produced by CAB (controlled atmosphere brazing), our testing revealed significant drawbacks of their inclusion. Even at the low concentration of 0.03 wt.-%, the addition of divalent metal salt additions (magnesium nitrate hexahydrate in Comp5 and calcium sulfate dihydrate in Comp6) resulted in initial conductivity values significantly above 100 µS/cm (139 µS/cm and 143 µS/cm, respectively). In contrast, Ex7, which contains no divalent metal cations, maintained a low conductivity of only 60 µS/cm before testing and 66 µS/cm after testing, well below the required 100 µS/cm threshold.

Notably, these comparative compositions showed severe corrosion during ASTM D1384 corrosion test, with particularly bad results on cast iron (215.0 mg/plate and 353.5 mg/plate weight loss for Comp5 and Comp6, respectively, compared to only 2.5 mg/plate for Ex7). This demonstrates that inventive compositions essentially free of divalent metal cations, as exemplified by Ex7, provide both the low electrical conductivity and comprehensive corrosion protection needed for modern electric vehicle cooling systems, whereas the inclusion of small amount of divalent metal in the coolant as taught in WO2023180531A1 leads to compositions that fail to meet both the electrical conductivity requirements and the comprehensive corrosion protection needed for modern electric vehicle cooling systems.

**Table 2: Comparison of Corrosion Protection and Electrical Conductivity Between Inventive Example (Ex7) and Compositions Containing Divalent Metal Salts (Comp5 and Comp6)**

| Composition | Component | Ex7 | Comp5 | Comp6 |
|---|---|---|---|---|
| Monoethylenglykol | A | 49.97 | 49.95 | 49.95 |
| DI-Water | B | 49.81 | 49.80 | 49.80 |
| Tolyltriazole | C | 0.10 | 0.10 | 0.10 |
| Triethanolamine | D | 0.08 | 0.08 | 0.08 |
| Sebacic acid | E | 0.02 | 0.02 | 0.02 |
| triethanolammonium salt of 10-phosphonodecanoic acid | F | 0.02 | 0.02 | 0.02 |
| Magnesium nitrate hexahydrate | | | 0.03 | |
| Calcium sulphate dihydrate | | | | 0.03 |
| Sum | | 100.00 | 100.00 | 100.00 |
| Characteristics | unit | Ex7 | Comp5 | Comp6 |
| Visual assessment of the fluid | | Yellow. clear | orange with sediment | orange with sediment |
| Appearance of metals | | no corrosion | visual corrosion on cast iron and aluminum | visual corrosion on cast iron and steel |
| pH prior to Test | | 7.6 | 7.6 | 7.6 |
| pH after Test | | 7.5 | 7.6 | 7.3 |
| RA prior to Test | mL 0.1M HCl/10mL | 0.4 | 0.4 | 0.4 |
| RA after Test | mL 0.1M HCl/10mL | 0.3 | 0.4 | 0.3 |
| conductivity (25°C) prior to Test | µS/cm | 60 | 139 | 143 |
| conductivity (25°C) after Test | µS/cm | 66 | 139 | 157 |
| Copper | mg/Plate | -0.2 | 0.5 | 1.4 |
| Solder | mg/Plate | 3.0 | 48.0 | 9.9 |
| Brass | mg/Plate | -0.5 | 0.4 | 2.7 |
| Steel | mg/Plate | -1.0 | 0.5 | 4.4 |
| Cast iron | mg/Plate | 2.5 | 215.0 | 353.5 |
| Aluminum | mg/Plate | -1.2 | 34.0 | -0.3 |

## Claims

1. Coolant, comprising
(A) at least one alkylene glycol,
(B) water,
(C) at least one azole derivative,
(D) at least one tertiary amine,
(E) at least one mono- or di-carboxylic acid,
(F) a phosphonic acid derivative,
(G) optionally at least one further coolant additive.

2. Coolant according to claim 1, wherein components (C) to (G) are present in amounts so that the coolant exhibits an electrical conductivity of less than 100, preferably less than 80, and more preferably less than 70 µS/cm.

3. Coolant according to claim 1 and/or 2, wherein the alkylene glycols (A) are according to the formula
R^{A}-O-(CH₂-CHR^{C}-O)ₙ-R^{B}
wherein
R^{A} and R^{B} are independently H or C₁ to C₄ alkyl,
R^{C} is H or methyl, and
n is a number from 1 to 5.

4. Coolant according to one or more of claims 1-3, wherein the alkylene glycols (A) are selected from the group consisting of monoethylene glycol, diethylene glycol, triethylene glycol, tetraethylene glycol and mixtures thereof, but also monopropylene glycol, dipropylene glycol and mixtures thereof, 1,3-propanediol, higher poly alkylene glycols, alkylene glycol ethers, for example monoethylene glycol monomethyl ether, diethylene glycol monomethyl ether, triethylene glycol monomethyl ether, tetraethylene glycol monomethyl ether, monoethylene glycol monoethyl ether, diethylene glycol monoethyl ether, triethylene glycol monoethyl ether, tetraethylene glycol monoethyl ether, monoethylene glycol mono-n-butyl ether, diethylene glycol mono-n-butyl ether, triethylene glycol mono-n-butyl ether and tetraethylene glycol mono-n-butyl ether, or glycerol, in each case either alone or as mixtures thereof.

5. Coolant according to one or more of claims 1-4, wherein the azole derivative is a five-membered heterocyclic compound having 2 or 3 heteroatoms from the group consisting of nitrogen and sulfur, which comprise no or at most one sulfur atom, and which may be fused to an aromatic or saturated six-membered carbocyclic ring, said ring may be substituted with an C₁-C₁₀-alkyl group.

6. Coolant according to one or more of claims 1-5, wherein the azole derivative
is according to the general formulae (I) and (II) 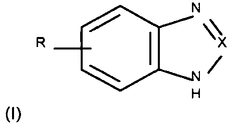 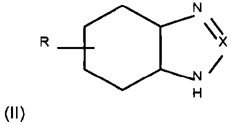
wherein
R is hydrogen or a C₁-C₁₀-alkyl group, in particular methyl or ethyl, and
X is a nitrogen atom or the C-H group.
Typical and preferred examples of azole derivatives of the general formula (I) are benzimidazole (X=C-H, R=H), benzotriazoles (X=N, R=H) and Tolyltriazol (Tolyltriazol) (X=N, R=CH₃).

7. Coolant according to one or more of claims 1-6, wherein the azole derivative is according to the general formula (III) 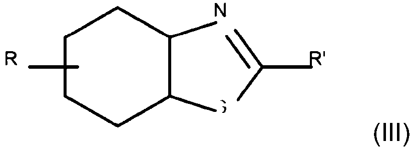 wherein
R is hydrogen or a C₁-C₁₀-alkyl group, in particular methyl or ethyl, and
R' is hydrogen, a C₁-C₁₀-alkyl radical, in particular methyl or ethyl, or in particular a mercapto group (-SH).

8. Coolant according to one or more of claims 1-7, wherein the azole derivative is according to the general formula (IV) 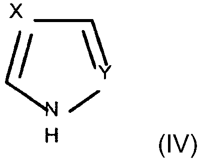 wherein
X and Y are selected from two nitrogen atoms or one nitrogen atom and one C-H group.

9. Coolant according to one or more of claims 1-8, wherein the azole derivative is selected from the group consisting of benzimidazole, benzotriazole, Tolyltriazol, hydrogenated tolyltriazole or mixtures thereof, in particular benzotriazole or Tolyltriazol.

10. Coolant according to one or more of claims 1-9, wherein the tertiary amines correspond to the formula (V)
NR⁶R⁷R⁸ (V)
wherein R⁶, R⁷ and R⁸ are independently selected from the group consisting of 2-hydroxyethyl, 2-hydroxypropyl, or aliphatic, cycloaliphatic or aromatic groups with up to 20 carbon atoms, preferably with up to 18, more preferably with up to 16, even more preferably with up to 14, and especially up to 12 carbon atoms, with the proviso that at least one of R⁶, R⁷ and R⁸ is 2-hydroxyethyl or 2-hydroxypropyl.

11. Coolant according to one or more of claims 1-10, wherein the tertiary amine is selected from the group consisting of n-hexylamine, 2-methylpentylamine, n-heptylamine, 2-heptylamine, isoheptylamine, 1-methylhexylamine, n-octylamine, 2-ethylhexylamine, 2-aminooctane, 6-methyl-2-heptylamine, n-nonylamine, isononylamine, n-decylamine, 2-propylheptylamine, triethanolamine and tripropanolamine, dimethyl ethanolamine, dimethyl propanolamine, diethyl ethanolamine, di-n-butyl ethanolamine, N-hydroxyethyl morpholine, bis(2-hydroxyethyl) n-hexylamine, bis(2-hydroxyethyl) n-octylamine, bis(2-hydroxyethyl) 2-ethylhexylamine, bis(2-hydroxyethyl) n-decylamine, bis(2-hydroxyethyl) cyclohexylamine, triethanolamine and sugar based, tert. amines, such as N,N,-Dimethylglucamine and N-2-hydroxyethyl-N-Methyl-glucamine, and N-2-hydroxypropyl-N-Methyl-glucamine or mixtures thereof.

12. Coolant according to one or more of claims 1-11, wherein the phosphonic acid derivative is an organophosphorus acid or a salt thereof according to formula (VIII) 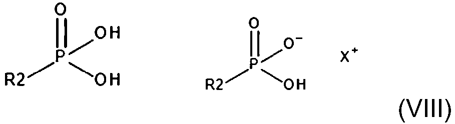 wherein R2 is an alkyl group comprising between 2 and 20 carbon atoms, preferably 4 to 12 carbon atoms, most preferably 6 to 10 carbon atoms and X⁺ is selected from the group consisting of alkali metals, ammonium, and primary, secondary and tertiary ammonium cations, wherein R² may be substituted with one or more of hydroxyl group, amine group, phosphonic acid group or a salt thereof and carboxylic acid group or a salt thereof, and wherein the R² may comprise one or more of nitrogen, oxygen and sulphur atoms, with the exclusion of the position of R² that is bonded to the phosphorus atom.

13. Coolant according to claim 12, wherein the phosphonic acid derivative is according to formulae la, Ib or Ic

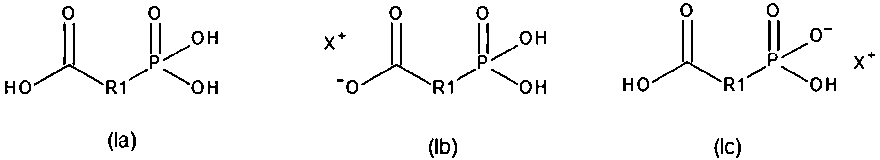

14. Coolant according to one or more of claims 1-13, wherein the phosphonic acid derivative is a carboxy functionalized organophosphorus acid according to formula (II) 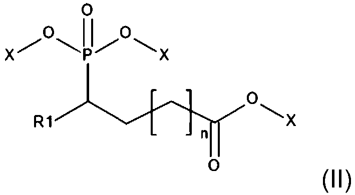 wherein
R1 is selected from hydrogen or a C1-C4 alkyl group,
X is selected from hydrogen, alkali metal, or an ammonium group, preferably selected from hydrogen or triethanolammonium,
n stands for a number from 5 - 7, and
the sum (N+n+3), wherein N is the total number of all carbon atoms in R, from 8 to 14.

15. Coolant according to one or more of claims 1-14, wherein the phosphonic acid derivative is the triethanolammonium salt of 10-phosphonodecanoic acid.

16. Coolant according to one or more of claims 11-15, wherein the phosphonic acid derivative is present in an amount within the range of 0.001-0.2 wt.%, by total weight of the coolant composition, preferably within the range of 0.002-0.08 wt.%.

17. Coolant according to one or more of claims 1-16, comprising
(A) at least one alkylene glycol, selected from alkylene glycols (A) according to the formula
R^{A}-O-(CH₂-CHR^{C}-O)ₙ-R^{B}
wherein
R^{A} and R^{B} are independently H or C₁ to C₄ alkyl,
R^{C} is H or methyl, and
n is a number from 1 to 5,
(B) water,
(C) at least one azole derivative, wherein the azole derivative is a five-membered heterocyclic compound having 2 or 3 heteroatoms from the group consisting of nitrogen and sulfur, which comprise no or at most one sulfur atom, and which may be fused to an aromatic or saturated six-membered carbocyclic ring, said ring may be substituted with an C₁-C₁₀-alkyl group
(D) at least one tertiary amine, wherein the tertiary amines correspond to the formula (V)
NR⁶R⁷R⁸ (V)
wherein R⁶, R⁷ and R⁸ are independently selected from the group consisting of 2-hydroxyethyl, 2-hydroxypropyl, or aliphatic, cycloaliphatic or aromatic groups with up to 20 carbon atoms, preferably with up to 18, more preferably with up to 16, even more preferably with up to 14, and especially up to 12 carbon atoms, with the proviso that at least one of R⁶, R⁷ and R⁸ is 2-hydroxyethyl or 2-hydroxypropyl,
(E) at least one mono- or di-carboxylic acid, selected from monocarboxylic acids with up to 20 carbon atoms and dicarboxylic acid with up to 20 carbon atoms,
(F) a phosphonic acid derivative, wherein the phosphonic acid derivative is an organophosphorus acid or a salt thereof according to formula (VIII) 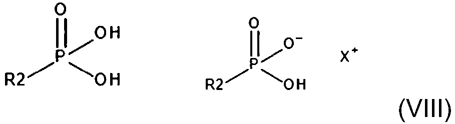 wherein R2 is an alkyl group comprising between 2 and 20 carbon atoms, preferably 4 to 12 carbon atoms, most preferably 6 to 10 carbon atoms and X⁺ is selected from the group consisting of alkali metals, ammonium, and primary, secondary and tertiary ammonium cations, wherein R² may be substituted with one or more of hydroxyl group, amine group, phosphonic acid group or a salt thereof and carboxylic acid group or a salt thereof, and wherein the R² may comprise one or more of nitrogen, oxygen and sulphur atoms, with the exclusion of the position of R² that is bonded to the phosphorus atom.

18. Coolant according to one or more of claims 1-17, comprising
(A) at least one alkylene glycol in an amount of 10 to 90 wt%, preferably 20 to 80 wt%, more preferably 30 to 70 wt%,
(B) water in an amount of 10 to 90 wt%, preferably 20 to 80 wt%, more preferably 30 to 70 wt%,
(C) at least one azole derivative in an amount of 0.01 to 1 wt%, preferably 0.02 to 0.9 wt%, more preferably 0.03 to 0.8 wt%, even more preferably 0.04 to 0.5, especially 0.05 to 0.3 wt%,
(D) at least one tertiary amine in an amount of 0.01 to 1 wt%, preferably 0.015 to 0.9 wt%, more preferably 0.02 to 0.8 wt%,
(E) at least one monocarboxylic acid in an amount of 0.01 to 1 wt%, preferably 0.015 to 0.8 wt%, more preferably 0.02 to 0.6 wt%,
(F) at least one phosphonic acid derivative in an amount of 0.005 to 0.5 wt%, preferably 0.008 to 0.2 wt%, more preferably 0.01 to 0.1 wt%
(G) optionally at least one further coolant additive in an amount of 0 to 0.5 wt% for each further coolant additive, preferably 0.01 to 0.4 wt%, more preferably 0.02 to 0.3 wt%.
with the proviso that the sum of all components adds up to 100 wt%.

19. Coolant according to one or more of claims 1-18, wherein a defoamer is present as a further coolant additive in an amount of from 0.003 to 0.008% by weight as further coolant additive.

20. Coolant according to one or more of claims 1-19, wherein a bittering agent is present as further coolant additive in an amount of up to 100 ppm.

21. Coolant according to one or more of claims 1-20, wherein the coolant is essentially free of divalent metal cations.

22. The use of 10-phosphonodecanoic acid derivatives as additive in coolants composition with an electrical conductivity of below 100 µS/cm.

23. The use according to claim 22, wherein the additive is an anti-corrosion additive.
